# EUROPEAN PATENT APPLICATION

(11) **EP 4 343 952 A1**
(43) Date of publication of application: **27.03.2024**
(21) Application number: 22826581.5
(22) Date of filing: 21.10.2022
(51) Int. Cl.: H01M 50/503

(54) **CURRENT COLLECTING DISC AND BATTERY**

(30) Priority: 28.07.2022 CN 202210898924; 28.07.2022 CN 202221973856 U
(71) Applicant: Eve Power Co., Ltd., Jingmen, Hubei 448000 (CN)
(72) Inventor: LI, Shangyi, Jingmen Hubei 448000 (CN); YUE, Liangliang, Jingmen Hubei 448000 (CN); WANG, Zhiming, Jingmen Hubei 448000 (CN); CHEN, Min, Jingmen Hubei 448000 (CN)
(74) Representative: Murgitroyd & Company
(86) International application number: PCT/CN2022/126626
(87) International publication number: WO 2024/021327

(57) **Abstract**

A current collecting plate and a battery are provided in the present application, where the current collecting plate is applied to a battery including a battery cell and a housing, the current collecting plate includes a plate body and a buffer part, and at least two buffer parts are provided, each of the buffer parts is bent to form an abutment part, the abutment part is protruded from a side of the plate body away from the battery cell, the abutment part abuts against the housing, and one end of either of two adjacent ones of the buffer parts is connected through a weak part, and another end of the buffer part away from the weak part is connected with the plate body.

## Description

### CROSS-REFERENCE TO RELATED APPLICATIONS

This application claims priority to Chinese Patent Application No. 202210898924.2, filed on July 28, 2022 and Chinese Patent Application No. 202221973856.3, filed on July 28, 2022, both of which are herein incorporated by reference in their entireties.

### TECHNICAL FIELD

The present application relates to the field of batteries, for example, to a current collecting plate and a battery including the current collecting plate.

### BACKGROUND

With a wide application of a lithium-ion battery in electric bicycles, electric vehicles and large-scale energy storage power stations, industry puts forward higher and higher requirements for specifications, technical performance and reliability application of the lithium-ion battery. Much attention is focused on a cylindrical lithium-ion battery because of its high energy density, low cost and good safety performance.

In assembling of the cylindrical lithium-ion battery, a tab and a cap of the battery are usually connected together by a current collecting plate. An end of the current collecting plate is welded with the tab of the battery by laser welding, and another end of the current collecting plate is connected with the cap of the battery by welding or riveting, so that the cylindrical lithium-ion battery is sealed to form a current loop.

The current collecting plate is used to collect current. It is found in a study of the cylindrical lithium-ion battery that a structural design of the current collecting plate is strongly correlated with safety of a battery cell. However, a safe function of structure of the current collecting plate is relatively weak. When the battery cell expands, the current collecting plate cannot release an expansion pressure well, which cannot satisfy safety requirements of the battery.

### SUMMARY

A current collecting plate is provided in an embodiment of the present application, where a structure of the current collecting plate is simple and an expansion space can be provided for a battery cell.

Another embodiment of the present application provides a battery with high safety.

In a first aspect, a current collecting plate is provided in an embodiment of the present application, applied to a battery including a battery cell and a housing, where the current collecting plate includes a plate body and a buffer part, and at least two buffer parts are provided, each of the buffer parts is bent to form an abutment part, the abutment part is protruded from a side of the plate body away from the battery cell, the abutment part abuts against the housing, and one end of either of two adjacent ones of the buffer parts is connected through a weak part, and another end of the buffer part away from the weak part is connected with the plate body.

In an embodiment, the plate body is provided with at least two current collecting pieces, the current collecting pieces are configured to be welded with a tab of the battery cell, the current collecting pieces are spaced from the buffer parts, and each of the current collecting pieces comprises a current collecting body and a connecting part, the connecting part is protruded at a side of the current collecting body close to the plate body, the connecting part is connected with the plate body, and the current collecting body is spaced from the plate body.

In an embodiment, the plate body is annular, the current collecting pieces are located in an annular region of the plate body, and a shape of the current collecting body matches a region surrounded by the plate body, the buffer parts, and the weak part.

In an embodiment, the buffer parts are uniformly and annularly distributed along a circumferential direction of the plate body, and one of the current collecting pieces is arranged between two adjacent ones of the buffer parts.

In an embodiment, at least one of following conditions is satisfied with:
a spacing distance between each of the current collecting pieces and a corresponding one of the buffer parts ranges from 0.6 mm to 2 mm;
a spacing distance between each of the current collecting pieces and the plate body ranges from 0.3 mm to 0. 8 mm; and
each of the current collecting pieces is in a fan-ring shape, and an inner circle diameter of each of the current collecting pieces ranges from 12 mm to 18 mm, and an outer circle diameter of each of the current collecting pieces ranges from 40 mm to 44.5 mm.

In an embodiment, two adjacent ones of the buffer parts are connected by one of the weak parts, and all of the buffer parts are enclosed by the weak parts to define a first through hole, and the first through hole right corresponds to a center position of the battery cell.

In an embodiment, the buffer part is provided with a second through hole.

In an embodiment, an outer periphery of the plate body is provided with a flange.

In an embodiment, a plurality of third through holes are defined in a bent region of the flange, and the plurality of third through holes are spaced from each other along a circumferential direction of the plate body.

In an embodiment, the flange is at the same side as the abutment part.

In an embodiment, a cross-sectional shape of the abutment part is arc-shaped, flat-topped, or wavy-shaped.

In an embodiment, a width of the plate body ranges from 1 mm to 3 mm, and a width of the weak part ranges from 0.3 mm to 0.8 mm.

In a second aspect, a battery is provided in another embodiment of the present application, including a housing and the above-mentioned current collecting plate, where the housing includes a housing body and a cover plate, and a seal part is sandwiched between the housing body and the cover plate; and
the plate body of the current collecting plate is connected with the housing body, and the buffer part abuts against the cover plate.

Beneficial effects according to the present application are that:
By providing a weak part connected with a buffer part, when a battery cell is in thermal runaway and expands, a pressure generated by expansion of the battery cell or a pressure inside a buffer cavity may squeeze the current collecting plate, so that a weak part on the current collecting plate is broken. After the weak part is broken, the bent buffer part can generate a deformation to absorb the pressure generated by the expansion of the battery cell, so that the pressure generated by the expansion of the battery cell may be fully released.

### BRIEF DESCRIPTION OF THE DRAWINGS

The present application is described in further details below with reference to attached drawings and embodiments.
FIG 1 is a schematic diagram of a current collecting plate provided by an embodiment of the present application from a point of view.
FIG. 2 is a schematic enlarged diagram of part A of FIG 1.
FIG. 3 is a schematic diagram of the current collecting plate provided by an embodiment of the present application from another point of view.
FIG 4 is a schematic enlarged diagram of part B of FIG. 3.
FIG 5 is a schematic enlarged diagram of part C of FIG 3.

### Reference numerals:

1, plate body; 2, current collecting piece; 3, buffer part; 301, first piece; 302, second piece; 303, abutment part; 304, second through hole; 4, weak part; 5, first through hole; 6, flange; 601, third through hole.

### DETAILED DESCRIPTION OF THE EMBODIMENT

In description of the present disclosure, unless otherwise specified and defined, terms "connected" and "fixed" should be understood in a broad sense, for example, it may be a fixed connection, a detachable connection, or a whole; it may be a mechanical connection or an electrical connection; it may be a directly connection or an indirectly connection through an intermediate media; and it may be an internal connection of two components or an interaction relationship between two components. For those skilled in the art, meanings of the above terms in the present disclosure can be understood according to situations.

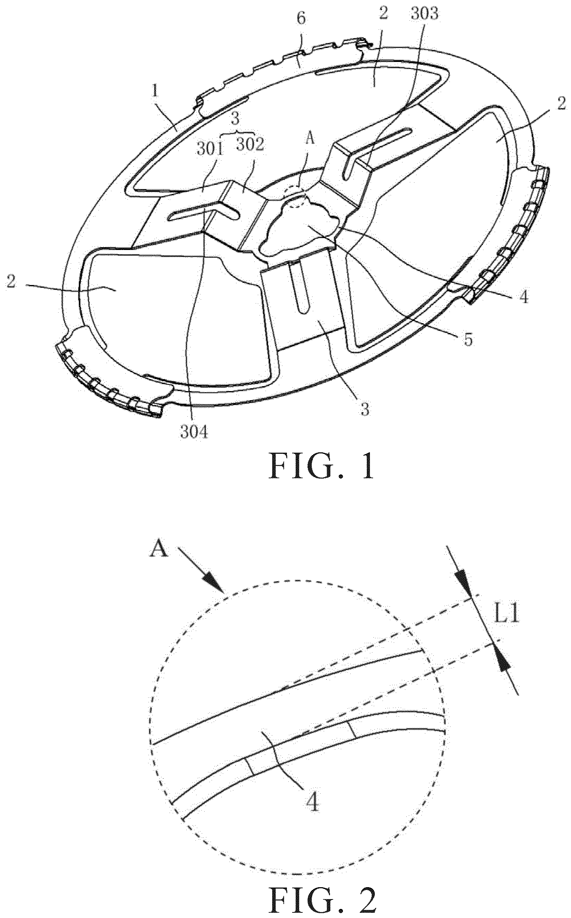

As shown in FIG 1 to FIG 3, a current collecting plate is provided in the application, where the current collecting plate includes a plate body 1 and a buffer part 3, and at least two buffer parts 3 are provided, each of the buffer parts 3 is bent to form an abutment part 303, the abutment part 303 protrudes from a side of the plate body 1 away from a battery cell, the abutment part 303 abuts against a housing of a battery, and one end of either of two adjacent ones of the buffer parts 3 are connected through a weak part 4, another end of the buffer part 3 away from the weak part 4 is connected with the plate body, and the weak part 4 can be squeezed and broken by expansion of a battery cell. In the present embodiment, the current collecting plate is arranged in a housing of the battery, the current collecting plate is located on a side of the battery cell, and a side of the current collecting plate abuts against the battery cell, and another side of the current collecting plate abuts against an inner wall of an end of the housing of the battery, so that a buffer cavity is defined between the battery cell and the housing of the battery. By providing the weak part 4 connected with the buffer part 3, when the battery cell is in thermal runaway and expands, a pressure generated by expansion of the battery cell or a pressure inside the buffer cavity may squeeze the current collecting plate, so that the weak part 4 on the current collecting plate is broken. After the weak part 4 is broken, the bent buffer part 3 can generate a deformation to absorb the pressure generated by the expansion of the battery cell, so that the pressure generated by the expansion of the battery cell may be fully released.

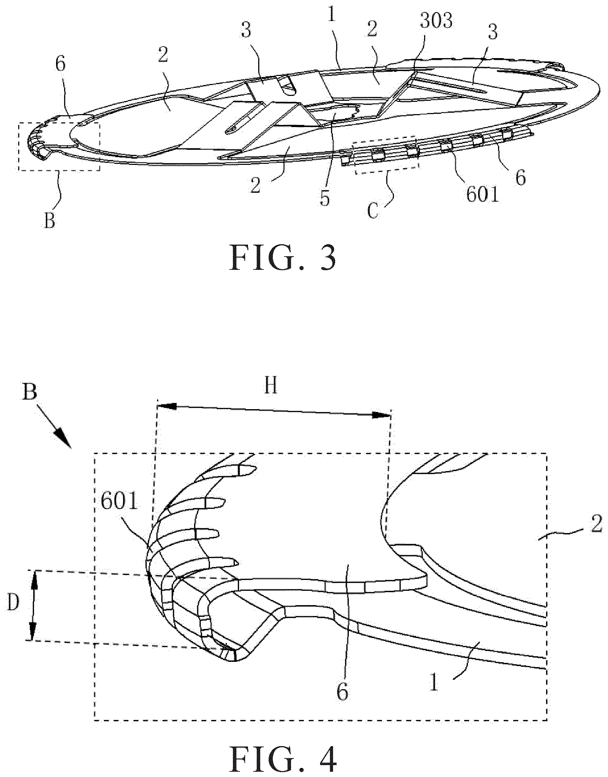

In the present embodiment, a width of the plate body 1 ranges from 1 mm to 3 mm. As shown in FIG 3, a width L1 of the weak part 4 ranges from 0.3 mm to 0.8 mm. By limiting the width of the plate body 1, a strength of the plate body 1 and connection stability between the current collecting plate and the housing of the battery may be ensured. By limiting the width of the weak part 4, a strength of the weak part 4 may be ensured. When the battery cell expands normally, the weak part 4 will not break. When the battery cell expands out of control, the weak part 4 can be squeezed and broken by the pressure generated by the expansion of the battery cell or the pressure inside the buffer cavity.

For example, the plate body 1 is provided with at least two current collecting pieces 2, the current collecting pieces 2 are spaced from the buffer parts 3, and each of the current collecting pieces 2 includes a current collecting body and a connecting part, the connecting part is protruded at a side of the current collecting body close to the plate body 1, the connecting part is connected with the plate body 1, and the current collecting body is spaced from the plate body 1. In the present embodiment, the current collecting pieces 2 are configured to be welded with a tab of the battery cell, current of the battery cell is transferred to the housing of the battery through the current collecting pieces 2. By spacing the current collecting pieces 2 from the plate body 1, and spacing the current collecting pieces 2 from the buffer parts 3, when the battery cell generates gas expansion, smooth gas expelling passages are defined by a space region between the current collecting pieces 2 and the plate body 1, and a space region between the current collecting pieces 2 and the buffer parts 3, so that gas generated by the battery cell may be expelled in time.

For example, the plate body 1 is annular, the current collecting pieces 2 are located in an annular region of the plate body 1, and a shape of the current collecting body matches a region surrounded by the plate body 1, the buffer parts 3, and the weak part 4. In the present embodiment, the current collecting body is in a fan-ring shape. By providing the current collecting body in the fan-ring shape, shapes of the current collecting pieces 2 may match a shape of the plate body 1, so that a welding area between the current collecting pieces 2 and the battery cell is increased, and stable power supply of the battery may be ensured.

In the present embodiment, a spacing distance between each of the current collecting pieces 2 and a corresponding one of the buffer parts 3 ranges from 0.6 mm to 2 mm; And/or the current collecting pieces 2 are in a fan-ring shape, and an inner circle diameter of each of the current collecting pieces 2 ranges from 12 mm to 18 mm, and when the battery cell is in thermal runaway, an enough space size to pull out an core of the battery cell is ensured. An outer circle diameter of each of the current collecting pieces 2 ranges 2 from 40 mm to 44.5 mm, and a spacing distance between each of the current collecting pieces 2 and the plate body 1 ranges from 0.3 mm to 0. 8 mm, and when the battery cell is in thermal runaway, the current collecting pieces 2 may move together with the tab of the battery cell, so as to prevent the gas generated by the battery cell from being expelled smoothly, resulting in explosion of the battery cell.

For example, the buffer parts 3 are uniformly and annularly distributed along a circumferential direction of the plate body 1, and one of the current collecting pieces 2 is arranged between two adjacent ones of the buffer parts 3. By providing the buffer parts 3 uniformly and annularly distributed along a circumferential direction of the plate body 1, the abutment part may be uniformly and annularly distributed along the circumferential direction of the plate body 1, so that the current collecting plate can be uniformly contacted with the housing of the battery. In the present embodiment, three the buffer parts 3 and three the current collecting pieces 2 are both provided, the three buffer parts 3 are uniformly distributed along the circumferential direction of the plate body 1, and the three current collecting pieces 2 are also uniformly distributed along the circumferential direction of the plate body 1.

For example, each of the buffer parts 3 includes a first piece 301 and a second piece 302 connected at an included angle. The first piece 301 is connected to the plate body 1, the second piece 302 is connected to the weak part 4, and an abutment part 303 is defined between the first piece 301 and the second piece 302. The abutment part 303 abuts tightly against the housing, and abutment parts 303 of all of the buffer parts 3 have the same height, that is, force strengths generated by the abutment parts 303 of all of the buffer parts 3 abutting against the housing are the same. By providing the first piece 301 and the second piece 302, the bent buffer part 3 may increase the gas expelling passages of the battery cell, thus improving safety of thermal runaway of the battery cell. By providing all of the abutment parts 303 with the same height, force strengths generated by all of the buffer parts 3 abutting against the housing are the same, so that the weak part 4 may be uniformly stressed, and the weak part 4 may be prevented from being squeezed and broken by other external forces. In the present embodiment, a width of the buffer part 3 ranges from 4 mm to 8 mm, that is, widths of the first piece 301 and the second piece 302 both range from 4 mm to 8 mm, so as to ensure that the buffer part 3 may provide a sufficient resilience after it is pressed. Heights of the abutment parts 303 of all of the buffer parts 3 all range from 1.5 mm to 3 mm, and the height here refer to a distance between the abutment part 303 and a side of the plate body 1 away from the battery cell.

The buffer part 3 is bent, and a bent part of the buffer part 3 refers to the abutment part 303. In the present embodiment, by bending the buffer part 3 once, a cross-sectional shape of the abutment part 303 is arc-shaped. In other embodiments, the buffer part 3 may be bent several times. For example, when the buffer part 3 is bent twice, the abutment part 303 is formed by a portion between two bent positions, and the cross-sectional shape of the abutment part 303 is flat-topped. For another example, when the buffer part 3 is bent three or more times, the abutment part 303 is formed by a portion between two bent positions at the most edge. In this case, the cross-sectional shape of the abutment part 303 is wavy-shaped. By providing a plurality of abutment parts 303 having different shapes, strengths of the buffer parts 3 may be changed, thereby adjusting a pre-tightening force between the current collecting plate and the battery cell.

For example, a plurality of weak parts 4 are provided, two adjacent ones of the buffer parts 3 are connected by one of the weak parts 4, and all of the buffer parts 3 are enclosed by the weak parts 4 to define a first through hole 5, where the first through hole 5 right corresponds to a central position of the battery cell. By providing the first through hole 5, the gas expelling passages of the battery cell may be increased, so that gas may be better expelled when the battery cell is rolled. A variability of the buffer part 3 may be improved by providing the first through hole 5, and when the weak parts 4 is broken, the bent buffer part 3 may be straightened, thereby realizing a deformation of the buffer part 3 to absorb expansion of the battery cell. In the present embodiment, a width of the first through hole 5 ranges from 8 mm to 12 mm.

For example, the buffer part 3 is provided with a second through hole 304. In the present embodiment, the second through hole 304 is defined on the first piece 301 and is extended to the second piece 302. By defining the second through hole 304, the gas expelling passages of the battery cell may be further increased, so that gas may be better expelled when the battery cell is rolled.

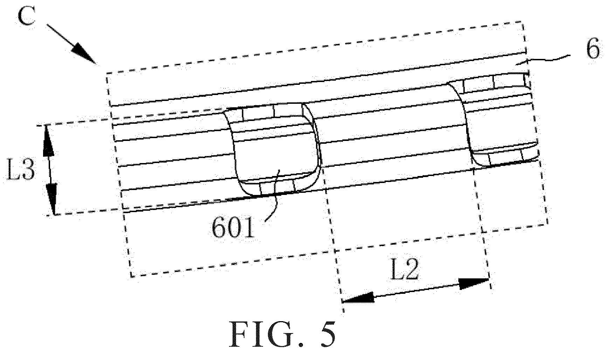

Referring to FIG 3 to FIG 5, for example, an outer periphery of the plate body 1 is provided with a flange 6. In the present embodiment, the flange 6 is welded with the housing of the battery, the housing of the battery is provided with a necking structure, and the flange 6 is located below the necking structure. By providing the flange 6, a strength of the plate body 1 may be improved, a reliability of electrical connection between the current collecting plate and the housing of the battery may be ensured, thereby avoiding the current collecting plate from being deformed during processing a necking, and avoiding deformation of the current collecting plate from squeezing the battery cell or being inserted into the battery cell when the current collecting plate is deformed so as to cause an open circuit failure of the battery cell. In the present embodiment, three flanges 6 are provided, and the three flanges 6 are uniformly spaced from each other along the periphery of the plate body 1, and an arc of each of the flanges 6 ranges from 13 mm to 25 mm and a width H thereof ranges from 1.5 mm to 3 mm.

In the present embodiment, the flange 6 is at the same side as the abutment part 303, and abuts against a side edge of the necking. It can be understood that the bent flange 6 is provided with a certain elasticity, and the abutment part 303 of the current collecting plate abuts against the housing of the battery, so that both the flange 6 and the abutment part 303 may provide a pre-tightening force. Furthermore, by providing the flange 6 at the same side as the abutment part 303, a space occupation of the current collecting plate may be reduced, thereby reducing a size of the battery.

In the present embodiment, a plurality of third through holes 601 are provided in a bent region of the flange 6 and spaced from each other along the circumferential direction of the plate body1. By providing the third through holes 601, it is possible to reduce a strength of a bent region of the flange 6, thereby improving a deformability of the bent region of the flange 6, reducing a thickness of the bent flange 6, reducing a cell pressing amount of the battery cell, and improving safety of the battery cell. In the present embodiment, a thickness D of the bent region of the flange 6 ranges from 0.5 mm to 1.2 mm, a distance L2 between two adjacent ones of the third through holes 601 ranges from 2.5 mm to 5 mm, an arc of the flange 6 is H, and a length L3 of the third through hole 601 is satisfied with that L3 = 0. 3 H.

In the present embodiment, the current collecting plate is integrally formed, namely, the plate body 1, the current collecting piece 2, the buffer part 3, the flange 6, and the weak part 4 are integrally formed, and the buffer part 3 may be formed by stamping.

A battery is also provided in the present embodiment, including a housing and a current collecting plate of any of the above embodiments. The housing includes a housing body and a cover plate, and a seal part is sandwiched between the housing body and the cover plate, the plate body 1 of the current collecting plate is welded with the housing body, and the buffer part 3 abuts against the cover plate tightly. In an embodiment, the housing body and the cover plate are integrally formed, and the cover plate may be bent and formed by a blank part of the housing body. In the present embodiment, the housing body and the cover plate are two separate parts, and a gap defined between the housing body and the cover plate is sealed by a seal part. In the embodiment, the housing body is connected with a negative electrode of the battery cell through the plate body 1, at this time, the housing body is negatively charged, a seal part is arranged between the cover plate and the housing body. The seal part is usually made of rubber and other materials, and used for insulation. By providing the buffer part 3 abutting against the cover plate tightly, the cover plate may be negatively charged to form a cathode protection, thus improving a resistance of the cover plate from corrosion, thereby ensuring safety of the cover plate of the battery cell. Furthermore, the bent buffer part 3 may provide a sufficient resilience, so that buffer part 3 may be fully rebound after it is pressed down, thus ensuring effectiveness of the cathode protection of the cover plate.

In description of the disclosure, terms indicating orientation or location relationships such as "up", "down", "left", and "right" are based on orientation or location relationships shown in drawings, which are only for a convenience of description and simplified operation, rather than indicating or implying that devices or elements referred to must have a specific orientation, be constructed and operated in a specific orientation, so it cannot be understood as a limitation of the present disclosure. In addition, terms "first" and "second" are only used to distinguish in terms of description and have no special meanings.

In description of the present specification, description of reference terms "an embodiment" and "example" means that specific features, structures, materials or characteristics described in the embodiment or example are incorporated in at least one embodiment or example of the present application. In the present specification, schematic description of the above terms does not necessarily refer to the same embodiment or example.

In addition, it should be understood that, each of embodiments does not include only an independent technical solution while the present specification is described in accordance with the embodiments, and the present specification is described only for the sake of clarity. For those skilled in the art should take the specification as a whole, and technical schemes in multiple ones of the embodiments may be appropriately combined to form other embodiments that can be understood by those skilled in the art.

## Claims

1. A current collecting plate, applied to a battery comprising a battery cell and a housing, wherein the current collecting plate comprises a plate body and a buffer part, and at least two buffer parts are provided, each of the buffer parts is bent to form an abutment part, the abutment part is protruded from a side of the plate body away from the battery cell, the abutment part abuts against the housing, and a first end of either of two adjacent ones of the buffer parts is connected through a weak part, and a second end of the buffer part away from the weak part is connected with the plate body.

2. The current collecting plate according to claim 1, wherein the plate body is provided with at least two current collecting pieces, the current collecting pieces are configured to be welded with a tab of the battery cell, the current collecting pieces are spaced from the buffer parts, and each of the current collecting pieces comprises a current collecting body and a connecting part, the connecting part is protruded at a side of the current collecting body close to the plate body, the connecting part is connected with the plate body, and the current collecting body is spaced from the plate body.

3. The current collecting plate according to claim 2, wherein the plate body is annular, the current collecting pieces are located in an annular region of the plate body, and a shape of the current collecting body matches a region surrounded by the plate body, the buffer parts, and the weak part.

4. The current collecting plate according to claim 2, wherein the buffer parts are uniformly and annularly distributed along a circumferential direction of the plate body, and one of the current collecting pieces is arranged between two adjacent ones of the buffer parts.

5. The current collecting plate according to claim 2, wherein at least one of following conditions is satisfied with:
a spacing distance between each of the current collecting pieces and a corresponding one of the buffer parts ranges from 0.6 mm to 2 mm;
a spacing distance between each of the current collecting pieces and the plate body ranges from 0.3 mm to 0. 8 mm; and
each of the current collecting pieces is in a fan-ring shape, and an inner circle diameter of each of the current collecting pieces ranges from 12 mm to 18 mm, and an outer circle diameter of each of the current collecting pieces ranges from 40 mm to 44.5 mm.

6. The current collecting plate according to claim 1, wherein two adjacent ones of the buffer parts are connected by one of the weak parts, and all of the buffer parts are enclosed by the weak parts to define a first through hole, and the first through hole is right corresponds to a center position of the battery cell.

7. The current collecting plate according to claim 1, wherein the buffer part is provided with a second through hole.

8. The current collecting plate according to claim 1, wherein an outer periphery of the plate body is provided with a flange.

9. The current collecting plate according to claim 8, wherein a plurality of third through holes are defined in a bent region of the flange, and the plurality of third through holes are spaced from each other along a circumferential direction of the plate body.

10. The current collecting plate according to claim 8, wherein the flange is at the same side as the abutment part.

11. The current collecting plate according to claim 1, wherein a cross-sectional shape of the abutment part is arc-shaped, flat-topped, or wavy-shaped.

12. The current collecting plate according to claim 1, wherein a width of the plate body ranges from 1 mm to 3 mm, and a width of the weak part ranges from 0.3 mm to 0.8 mm.

13. A battery, comprising a housing and the current collecting plate according to any one of claim 1 to claim 12,
wherein the housing comprises a housing body and a cover plate, and a seal part is sandwiched between the housing body and the cover plate; and
the plate body of the current collecting plate is connected with the housing body, and the buffer part abuts against the cover plate.
